Europäisches Patentamt

European Patent Office

Office européen des brevets

(19)

(11) **EP 0 512 321 B1**

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(51) Int Cl.$^6$: **G03C 5/395**, G03C 7/44, G03D 3/06

(21) Anmeldenummer: **92106851.6**

(22) Anmeldetag: **22.04.1992**

(54) **Fotografisches Verarbeitungsverfahren**

Photographic processing method

Procédé de traitement photographique

(84) Benannte Vertragsstaaten:
**CH DE FR GB IT LI**

(30) Priorität: **04.05.1991 DE 4114591**

(43) Veröffentlichungstag der Anmeldung:
**11.11.1992 Patentblatt 1992/46**

(73) Patentinhaber: **Agfa-Gevaert AG**
**D-51373 Leverkusen (DE)**

(72) Erfinder:
• **Wernicke, Ubbo, Dr.**
**W-5064 Rösrath-Kleineichen (DE)**

• **Bachem, Egon**
**W-5093 Burscheid (DE)**

(56) Entgegenhaltungen:
**US-A- 4 160 594**

• **CHIMIA Bd. 36, Nr. 9, September 1982, AARAU CH Seiten 353 - 364; GUSTAV CRAWACK: 'Theorie und Praxis der gegenwartigen Bleich- und Bleichfixierbad Wiederauffrischung'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Verarbeitung fotografischer Materialien, bei dem nach der Entwicklung wenigstens eine weitere Chemikalienbehandlung folgt, vor und nach der je eine Wässerung vorgesehen ist.

Aus ökonomischen und ökologischen Gründen ist man bestrebt, die Chemikalienverluste bei fotografischen Verarbeitungsverfahren möglichst gering zu halten, beispielsweise durch überlauffreie Regenerierung oder durch Rejuvenierung des Überlaufs. Aber auch dann beträgt der Chemikalienverlust z.B. bei der Verarbeitung von 1.000 m² Colorpapier noch 15 bis 20 kg.

Diese Verluste entstehen dadurch, daß das Fotomaterial beim Übergang von einem Chemikalienbad in die nachfolgende Wässerung etwa 50 bis 200 ml chemikalienbeladene Lösung pro m² verschleppt.

Dieser Verschleppung wird normalerweise mit Abstreiferlippen, Gebläse, Vakuumabsaugung und ähnlichem entgegengewirkt. Auch ist vorgeschlagen worden, die Verluste dadurch zu begrenzen, daß man das Wasser, das mit Chemikalien angereichert ist, durch Verdampfung aufkonzentriert, bis die Konzentration des Bades - aus dem die Chemikalien verschleppt wurden - wieder hergestellt ist.

Das erfordert eine relativ hohe Energiezufuhr.

Bekannt ist weiterhin, das gesamte Wasser der Schlußwässerung für eine vorangehende Zwischenwässerung zum Zwecke der Wasserersparnis einzusetzen (CHIMIA, Bd. 36, Septemper 198, S. 353 bis 364, insbesondere Abb. 12 auf Seite 363).

Aufgabe der Erfindung war, die durch die Chemikalienverschleppung bedingten Verluste an Chemikalien zu vermindern.

Dies geschieht in überraschend hohem Maße mit einem Verarbeitungsverfahren der eingangs genannten Art dadurch, daß Materialeinlauf- bzw. Materialauslaufbereich der Wässerungstanks vom übrigen Tankinhalt durch quer zur Verarbeitungsrichtung in den Tank eingesetzte Trennwände, die über das Flüssigkeitsniveau des Tankinhalts reichen und am Boden einen geringen Spalt zum Hindurchtransportieren des fotografischen Materials freilassen, abgetrennt und daß aus dem Materialeinlaufbereich der nachgeschalteten Wässerung Flüssigkeit entnommen und dem Materialauslaufbereich der vorgeschalteten Wässerung zugeführt wird.

Die Chemikalienbehandlung kann z.B. eine Bleichung, eine Fixierung, eine Bleichfixierung, eine Stabilisierung, eine Konditionierung, ein Umkehrbad oder eine Zweitentwicklung sein.

In einer bevorzugten Ausführungsform wird das erfindungsgemäße Verfahren so durchgeführt, daß auf die Entwicklung (a) eine Wässerung, (b) eine Bleichung, (c) eine Wässerung, (d) eine Fixierung und (e) eine Wässerung folgt, und aus dem Materialeinlaufbereich der Wässerung (e) Flüssigkeit entnommen und dem Materialauslaufbereich der Wässerung (c) zugeführt und dem Materialeinlaufbereich der Wässerung (c) Flüssigkeit entnommen und dem Materialauslaufbereich der Wässerung (a) zugeführt wird.

Das erfindungsgemäße Verfahren kann mit anderen Verfahren, die die Verschleppungsrate erniedrigen oder den Frischwassereinsatz vermindern, kombiniert werden.

In den Fällen, in denen die Wässerungsrate unter 1 l/m² vermindert wird, kann es zweckmäßig sein, dem Wasser zur Verhinderung von Ausfällungen und evtl. Ablagerungen von Ca-Salzen geringe Mengen von Komplexbildnern vom Typ der Aminopolycarbonsäuren und/oder der organischen Phosphonsäuren zuzusetzen oder zum Schutz vor dem Wachstum von Mikroorganismen handelsübliche Biozide, z.B. vom Typ der Isothiazolinone, oder zum Schutz von Färbungen durch Oxidationsprodukte, Oxidationsschutzmittel wie Sulfit, Hydroxylamin oder Diethylhydroxylamin sowie Netzmittel zuzusetzen oder den pH-Wert auf Werte im Bereich 3,5 bis 9,5 einzustellen. Die Zusätze zur Wässerung erfolgen vorzugsweise in Konzentrationen von 0,001 bis 0,01 Mol/l.

Der Schlitz am unteren Ende der Trennwand kann durch Abquetschwalzen weitgehend vom übrigen Wässerungstank abgedichtet sein.

Der durch die Trennwand vom übrigen Tankinhalt abgetrennte Materialeinlauf- bzw. Materialauslaufbereich macht vorzugsweise 5 bis 50 % des gesamten mit Flüssigkeit gefüllten Tankvolumens eines Wässerungstanks aus.

Die entnommene und erneut aufgebrachte Lösung hat insbesondere 10 bis 90 % der Chemikalienkonzentration des zwischen Entnahme- und Antragsstelle liegenden Bades, vorzugsweise 20 bis 70 %, besonders bevorzugt 30 bis 60 %.

Die der nachgeschalteten Wässerung entnommene Lösung wird vorzugsweise auf das Fotomaterial oberhalb des Niveaus der vorgeschalteten Wässerung aufgetragen.

Die Menge der entnommenen Lösung beträgt insbesondere 30 bis 200 ml, vorzugsweise 40 bis 120 ml/m² verarbeitetes fotografisches Material.

Beispiele

Beispiel 1 (Vergleich)

Ein handelsübliches Colorpapier (Breite 8,9 cm) durchlief nach Entwicklung und Bleichen einen Wässerungstank und dann den Fixierbadtank, mit einem Fixierbad folgender Zusammensetzung:

100 g (NH$_4$)$_2$S$_2$O$_3$/l
10 g Na$_2$SO$_3$/l

Das Tankvolumen betrug 5 l, die Tanktemperatur 33°C, die Fixierzeit 45 s und der Papiervorschub 1m/min.

Das Material durchlief dann nacheinander zwei mit Wasser gefüllte Tanks (Volumen jeweils 5l). Es erfolgte

kein Wasserzulauf. Nach Verarbeitung von 115 m Papier wurde der Gehalt an $(NH_4)_2S_2O_3$ im ersten der beiden Wassertanks bestimmt: 12,5 g/l.

Gleichzeitig hatte die Konzentration an $(NH_4)_2S_2O_3$ im Fixierbadtank von 100 g/l auf 86 g/l abgenommen.

Der Verlust an $(NH_4)_2S_2O_3$ betrug demnach etwa 6,8 g/m Colorpapier.

### Beispiel 2

Es wurde wie in Beispiel 1 verfahren, jedoch wurde im ersten Wässerungstank eine Sektion von 1 1 Volumen an der Seite, wo das fotografische Material einläuft, durch eine Trennwand, die über das Flüssigkeitsniveau hinausreicht und am Boden nur einen schmalen Schlitz freiläßt, abgetrennt.

Nach Durchlauf von 115 m Papier (entsprechend 10,24 m ) wurde die Konzentration an $(NH_4)_2S_2O_3$ in dieser Sektion bestimmt: 39 g/l.

Die Konzentration an $(NH_4)_2S_2O_3$ war wie in Beispiel 1 auf 86 g/l gesunken.

### Beispiel 3 (erfindungsgemäß)

Es wurde wie in Beispiel 2 verfahren, jedoch wurde auch im Wässerungstank vor dem Fixierbad eine Sektion mit 1 1 Volumen an der Seite, an der das fotografische Material diese Wässerung verläßt, durch eine gleichartige Trennwand abgetrennt.

Aus der abgetrennten Sektion der nachgeschalteten Wässerung wurden mittels einer Pumpe 60 ml/m² entnommen und über der abgetrennten Sektion der vorgeschalteten Wässerung auf das Papier aufgetragen, so daß die entnommene Flüssigkeitsmenge in die abgetrennte Sektion der vorgeschalteten Wässerung einlief.

Nach Verarbeitung von 115 m Papier wurde die Konzentration an $(NH_4)_2S_2O_3$ im Fixierbad bestimmt: 89 g/l.

### Beispiel 4 (erfindungsgemäß)

Es wurde wie in Beispiel 3 verfahren, jedoch wurde die abgetrennte Sektion der nachfolgenden Wässerung auf 300 ml verringert und der Schlitz durch 2 Abquetschwalzen, durch die das fotografische Material läuft, soweit verschlossen, daß gerade noch ein Flüssigkeitsniveauausgleich zwischen abgetrennter Sektion und dem übrigen Volumen des Wässerungstanks möglich war.

Die mittels einer Pumpe entnommene Menge Flüssigkeit betrug 70 ml/m².

Nach Verarbeitung von 115 m Papier (entsprechend 10,24 m) betrug die $(NH_4)_2S_2O_3$-Konzentration im Fixierbad 93,5 g/l.

Im Dauerbetrieb konnte die Regenerierung entsprechend vermindert werden.

### Beispiel 5

Ein handelsübliches Colorpapier durchläuft nach der Entwicklung eine Wässerung, danach ein Bleichbad, eine Wässerung, ein Fixierbad, eine Schlußwässerung und die Trocknung. Das verwendete Bleichbad hat folgende chemische Zusammensetzung:

ca. 100 g $NH_4Br$/l
ca. 50 g $(NH_4)FeEDTA$/l
pH 6

Das Tankvolumen des Bleichbades beträgt 5 Liter, die Bleichzeit 60 s, die Temperatur 35°C.

### 5a Vergleich

Das Material wird auf dem üblichen U-förmigen Weg durch den Tank geleitet. Verarbeitet werden 20 m Colorpapier, 8,9 cm breite Rollenware. Es erfolgt keine Regenerierung.

Ermittelt wird die Änderung der chemischen Zusammensetzung des Bleichbades durch die Verarbeitung der 20 m . Die Veränderungen resultieren in erster Linie durch die Einschleppung von Wasser mit dem Fotomaterial in das Bad und durch die Ausschleppung von Bleichbad durch das Fotomaterial in die nachfolgende Wässerung.

Analysenwerte:
Vor Verarbeitung 98,5 g $NH_4Br$/l
Nach Verarbeitung 75,5 g $NH_4Br$/l

### 5b erfindungsgemäß

Das Material wird nicht auf dem üblichen direkten U-förmigen Weg von einem Tank zum anderen geleitet, sondern am Ausgang des ersten Wässerungstanks (vor dem Bleichbad) und am Ausgang des Bleichbadtanks selbst wird das Material durch 5 locker befestigte Rollenpaare geführt, die oberhalb des Flüssigkeitsniveaus paarweise übereinander angeordnet sind und sich entsprechend dem Materialvorschub mitdrehen.

Auf das oberste Rollenpaar des über dem Bleichbadniveau befindlichen Aggregates wird 50 ml Wasser pro Quadratmeter Material gleichmäßig aufgesprüht.

Das Wasser wird am unteren Ende der Vorrichtung weitgehend aufgefangen und auf eine gleiche Vorrichtung gepumpt, die sich oberhalb des Niveaus des Wässerungstanks vor dem Bleichbad befindet.

Wiederum werden 20 m² Colorpapier verarbeitet und die Änderung der Ammoniumbromidkonzentration analytisch überprüft.

| Analysenwerte: | |
|---|---|
| Vor Verarbeitung | 98,5 g $NH_4Br$/l |
| Nach Verarbeitung | 87 g $NH_4Br$/l. |

Durch das angegebene Entwicklungsverfahren wird der Verlust an Chemikalien durch Verschleppung in etwa halbiert.

| Verlust auf 20 m² | 98,5 |
|---|---|
| (normale Verarbeitung) | 75,5 |
| | 23,0 g/l 23,0 x 5 = 115 g |

| Verlust auf 20 m² | 98,5 |
|---|---|
| mit | 87,8 |
| erfindungsgemäßem | |
| Verfahren | 10,7 g/l 10,7 x 5 = 53,5 g |

## Patentansprüche

1. Verfahren zur Verarbeitung fotografischer Materialien, bei dem nach der Entwicklung wenigstens eine weitere Chemikalienbehandlung folgt, vor und nach der je eine Wässerung vorgesehen ist, dadurch gekennzeichnet, daß Materialeinlauf- bzw. Materialauslaufbereich der Wässerungstanks vom übrigen Tankinhalt durch quer zur Verarbeitungsrichtung in den Tank eingesetzte Trennwände, die über das Flüssigkeitsniveau des Tankinhalts reichen und am Boden einen geringen Spalt zum Hindurchtransportieren des fotografischen Materials freilassen, abgetrennt wird und daß aus dem Materialeinlaufbereich der nachgeschalteten Wässerung Flüssigkeit entnommen und dem Materialauslaufbereich der vorgeschalteten Wässerung zugeführt wird.

2. Verfahren nach Anspruch 1, dadurch gekennzeichnet, daß die Chemikalienbehandlung eine Bleichung, eine Fixierung, eine Bleichfixierung, eine Stabilisierung, eine Konditionierung, ein Umkehrbad oder eine Zweitentwicklung ist.

3. Verfahren nach Anspruch 1, dadurch gekennzeichnet, daß auf die Entwicklung (a) eine Wässerung, (b) eine Bleichung, (c) eine Wässerung, (d) eine Fixierung und (e) eine Wässerung folgt, aus dem Materialeinlaufbereich der Wässerung (e) Flüssigkeit entnommen und dem Materialauslaufbereich der Wässerung (c) zugeführt und dem Materialeinlaufbereich der Wässerung (c) Flüssigkeit entnommen und dem Materialauslaufbereich der Wässerung (a) zugeführt wird.

4. Verfahren nach Anspruch 1, dadurch gekennzeichnet, daß der Materialeinlauf- bzw. der Materialauslaufbereich eines Tanks 5 bis 50 % des gesamten mit Flüssigkeit gefüllten Tankvolumens eines Wässerungstanks ausmacht.

5. Verfahren nach Anspruch 1, dadurch gekennzeichnet, daß die entnommene und erneut aufgebrachte Lösung 10 bis 90 % der Chemikalienkonzentration des zwischen Entnahme- und Antragstelle liegenden Bades aufweist.

6. Verfahren nach Anspruch 1, dadurch gekennzeichnet, daß der Auftrag der der nachgeschalteten Wässerung entnommenen Lösung auf das Fotomaterial oberhalb des Niveaus des vorgeschalteten Wässerungstanks erfolgt.

7. Verfahren nach Anspruch 1, dadurch gekennzeichnet, daß die Menge der entnommenen Lösung 30 bis 200 ml/m² verarbeitetes fotografisches Material beträgt.

8. Verfahren nach Anspruch 1, dadurch gekennzeichnet, daß dem zur Wasserung verwendeten Wasser Netzmittel, Komplexbildner, Oxidationsschutzmittel und/oder Biozide zugesetzt werden.

## Claims

1. Process for processing photographic materials in which development is followed by at least one further chemical treatment which is preceded and followed by rinsing, characterised in that the material inlet and material outlet zones of the rinsing tanks are each separated from the remainder of the tank contents by partitions running transversely to the direction of processing, which partitions extend above the liquid level of the tank contents and leave a narrow gap at the bottom through which the photographic material may be conveyed and that liquid is removed from the material inlet zone of the downstream rinsing stage and introduced into the material outlet region of the upstream rinsing stage.

2. Process according to claim 1, characterised in that the chemical treatment consists of bleaching, fixing, bleach-fixing, stabilisation, conditioning, a reversal bath or second development.

3. Process according to claim 1, characterised in that development is followed by (a) rinsing, (b) bleaching, (c) rinsing, (d) fixing and (e) rinsing, liquid is taken from the material inlet zone of rinsing stage (e) and introduced into the material outlet zone of rinsing stage (c) and liquid is taken from the material inlet zone of rinsing stage (c) and introduced into the material outlet zone of rinsing stage (a).

4. Process according to claim 1, characterised in that the material inlet or material outlet zone of a tank amounts to 5 to 50% of the total liquid filled volume of the rinsing tank.

5. Process according to claim 1, characterised in that the removed and reapplied solution has from 10 to 90% of the concentration of the chemicals of the bath located between the point of removal and application.

6. Process according to claim 1, characterised in that the solution removed from the downstream rinsing stage is applied onto the photographic material above the level of the upstream rinsing tank.

7. Process according to claim 1, characterised in that the quantity of solution removed is 30 to 200 ml/m$^2$ of processed photographic material.

8. Process according to claim 1, characterised in that the water used for rinsing contains wetting agents, complexing agents, anti-oxidants and/or biocides.

## Revendications

1. Procédé de traitement de matériaux photographiques, où après le développement a lieu au moins un autre traitement chimique, avant et après lequel on prévoit un rinçage à l'eau, caractérisé en ce qu'on sépare le domaine d'entrée de matériau ou le domaine de sortie de matériau du bac de rinçage du reste du contenu du bac par une paroi de séparation implantée dans le bac transversalement au sens de traitement, qui dépasse le niveau de liquide du contenu du bac et qui laisse au fond une fente étroite pour laisser passer le matériau photographique et qu'on prélève du liquide du domaine d'entrée du matériau au rinçage suivant et on l'introduit dans le domaine de sortie du matériau du bac de rinçage en amont.

2. Procédé selon la revendication 1, caractérisé en ce que le traitement chimique est un blanchiment, un fixage, un blanchiment-fixage, une stabilisation, un conditionnement, un bain d'inversion ou un deuxième développement.

3. Procédé selon la revendication 1, caractérisé en ce que succèdent au développement (a) un rinçage, (b) un blanchiment, (c) un rinçage, (d) un fixage et (e) un rinçage, on prélève du liquide dans le domaine d'introduction du matériau au rinçage (e) et qu'on l'introduit dans le domaine de sortie du matériau au rinçage (c) et on prélève du liquide dans le domaine d'introduction du matériau au rinçage (c) et on l'introduit dans le domaine de sortie de matériau au rinçage (a).

4. Procédé selon la revendication 1, caractérisé en ce que le domaine d'introduction de matériau ou le domaine de sortie de matériau d'un bac représente 5 à 50 % de la totalité du volume de bac rempli de liquide d'un bac de rinçage.

5. Procédé selon la revendication 1, caractérisé en ce que la solution prélevée et rénovée représente 10 à 90 % de la concentration de produits chimiques du bain qui se trouve entre la zone de prélèvement et la zone d'introduction.

6. Procédé selon la revendication 1, caractérisé en ce que le dépôt sur le matériau photographique de la solution prélevée au rinçage en aval a lieu au-dessus du niveau du bac de rinçage en amont.

7. Procédé selon la revendication 1, caractérisé en ce que la quantité de la solution prélevée représente 30 à 200 ml/m$^2$ de matériau photographique traité.

8. Procédé selon la revendication 1, caractérisé en ce qu'on ajoute à l'eau utilisée pour le rinçage des mouillants, des complexants, des agents antioxydants et/ou des biocides.